# EUROPEAN PATENT APPLICATION

(11) **EP 1 998 143 A2**
(43) Date of publication of application: **03.12.2008**
(21) Application number: 08156645.7
(22) Date of filing: 21.05.2008
(51) Int. Cl.: G01C 21/36

(54) **Route setting system, route setting method, and program for executing the method**

(30) Priority: 31.05.2007 JP 2007144754
(71) Applicant: Aisin AW Co., Ltd., Fuji-cho Anjo-shi Aichi 444-1192 (JP)
(72) Inventor: Sakai, Takamitsu, Okazaki-shi Aichi 444-8564 (JP)
(74) Representative: TBK-Patent

(57) **Abstract**

The present invention enables accurate setting of a predetermined road as a driving route. The present invention includes scale determination processing means for reading the scale of a map displayed on a map screen, matching target road selection processing means for selecting, in accordance with the scale of the map, matching target roads which are target roads used for setting a driving route, specification determination processing means for determining whether or not a road has been specified by an operator, and road selection processing means for selecting, if the road has been specified by the operator, one of the matching target roads nearest to a specified point as a road used for setting the driving route. Therefore, the driving route can be accurately set.

## Description

### INCORPORATION BY REFERENCE

The disclosure of Japanese Patent Application No. 2007-144754 filed on May 31, 2007, including the specification, drawings and abstract thereof, is incorporated herein by reference in its entirety.

### BACKGROUND OF THE INVENTION

### 1. Field of the Invention

The present invention relates to a route setting system, a route setting method, and a program for executing the method.

### 2. Description of the Related Art

Conventionally, in a navigation device, when a driver inputs the destination and sets a search condition, a route search process is performed on the basis of the search condition to search for a route from the place of departure indicated by the current location to the destination on the basis of map data. Then, the route found by the search, i.e., the searched route is displayed on a map screen formed on a display unit together with a vehicle position representing the current location of a vehicle, to thereby perform the guidance along the searched route, i.e., the route guidance. Further, in addition to the display of the searched route on the map screen, the route guidance by an audio output is also performed.

Accordingly, the driver can drive the vehicle along the displayed searched route.

Meanwhile, a navigation device has been provided in which a predetermined road on the map screen of the display unit formed by a touch panel is set as the driving route to the destination by the tracing with a finger along the road without the execution of the search operation of the route (see Japanese Unexamined Patent Application Publication No. 2000-111354, for example).

### SUMMARY OF THE INVENTION

In the above-described conventional navigation device, however, if a plurality of roads are located adjacent to one another, for example, a road different from the road intended by the driver may be set as the driving route.

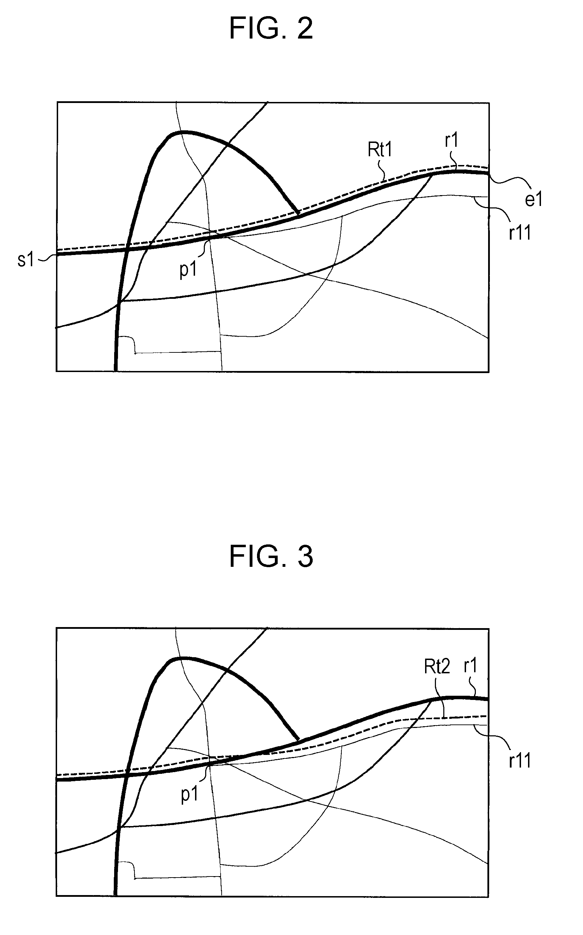

Fig. 2 is a first diagram for explaining a conventional driving route setting method, and Fig. 3 is a second diagram for explaining the conventional driving route setting method.

In the diagrams, r1 and r11, Rt1 and Rt2, s1, and e1 indicate roads, driving routes, a tracing start point representing the start point of the tracing, and a tracing end point representing the end point of the tracing, respectively. The road r11 branches from the road r1 at a branch point p1.

On a map screen of Fig. 2, if a finger of the driver fails to accurately touch the area of the road r1 on the touch panel when the driver performs the tracing with the finger along the road r1 from the tracing start point s1 to the tracing end point e1 to set the road r1 as the driving route Rt1, a portion of the road r1 extending from the tracing start point s1 to the branch point p1 and a portion of the road r11 extending from the branch point p1 to the tracing end point e1 may be set as the driving route R2, as illustrated in Fig. 3, for example.

In view of the circumstance of the above-described conventional navigation device, it is an object of the present invention to provide a route setting system, a route setting method, and a program for executing the method capable of accurately setting a predetermined road as the driving route.

To achieve the object, a route setting system according to an aspect of the present invention includes scale determination processing means for reading the scale of a map displayed on a map screen, matching target road selection processing means for selecting, in accordance with the scale of the map, matching target roads which are target roads used for setting a driving route, specification determination processing means for determining whether or not a road has been specified by an operator, and road selection processing means for selecting, if the road has been specified by the operator, one of the matching target roads nearest to a specified point as a road used for setting the driving route.

According to the aspect of the present invention, if the road has been specified by the operator, one of the matching target roads nearest to the specified point is selected as the road used for setting the driving route. Therefore, a predetermined road can be accurately set as the driving route.

### BRIEF DESCRIPTION OF THE DRAWINGS

Fig. 1 is a diagram illustrating a navigation system of an embodiment of the present invention;

Fig. 2 is a first diagram for explaining a conventional driving route setting method;

Fig. 3 is a second diagram for explaining the conventional driving route setting method;

Fig. 4 is a flowchart illustrating a driving route setting method of the embodiment of the present invention;

Fig. 5 is a diagram illustrating the types of roads of the embodiment of the present invention;

Fig. 6 is a diagram for explaining the driving route setting method of the embodiment of the present invention; and

Fig. 7 is a diagram illustrating an example of a matching target road map of the embodiment of the present invention.

### DESCRIPTION OF THE PREFERRED EMBODIMENT

An embodiment of the present invention will be described in detail below with reference to the drawings. In the present case, a navigation system serving as a route setting system will be described.

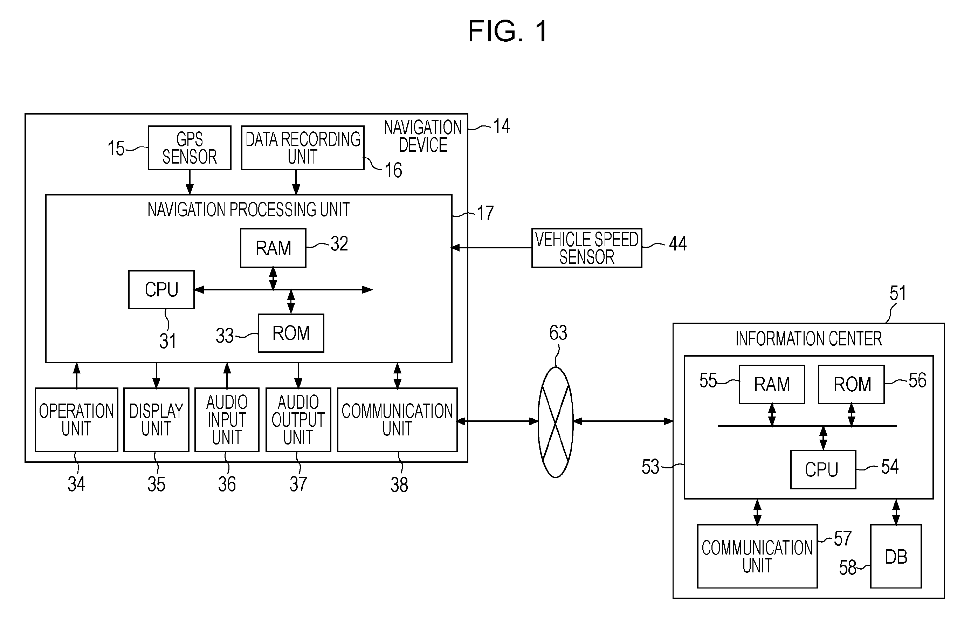

Fig. 1 is a diagram illustrating a navigation system of an embodiment of the present invention.

In the drawing, reference numerals 14, 63, and 51 indicate an information terminal such as a navigation device serving as an in-vehicle device installed in a vehicle, for example, a network, and an information center serving as an information provider, respectively. The navigation device 14, the network 63, the information center 51, and so forth constitute the navigation system.

The navigation device 14 includes a GPS (Global Positioning System) sensor 15, a data recording unit 16, a navigation processing unit 17, an operation unit 34, a display unit 35, an audio input unit 36, an audio output unit 37, and a communication unit 38. The GPS sensor 15 serves as a current location detection unit for detecting the current location of the vehicle as a vehicle position and the direction of the vehicle as a vehicle direction. The data recording unit 16 serves as an information recording unit in which not-illustrated map data and a variety of other information are recorded. The navigation processing unit 17 performs a variety of arithmetic processes such as a navigation process. The operation unit 34 serves as a first input unit used for a predetermined input performed through the operation of the unit by a driver, i.e., an operator. The display unit 35 serves as a first output unit for performing a variety of display operations with images displayed on a not-illustrated screen for notification to the driver. The audio input unit 36 serves as a second input unit used for a predetermined input performed by sound by the driver. The audio output unit 37 serves as a second output unit for performing an audio output to notify the driver of a variety of information. The communication unit 38 serves as a transmitting and receiving unit functioning as a communication terminal. The navigation processing unit 17 is connected to the GPS sensor 15, the data recording unit 16, the operation unit 34, the display unit 35, the audio input unit 36, the audio output unit 37, and the communication unit 38. The navigation processing unit 17 is further connected to, for example, a vehicle speed sensor 44 serving as a vehicle speed detection unit for detecting the vehicle speed. The GPS sensor 15 detects the time as well as the vehicle position and the vehicle direction. The vehicle direction can also be detected by a direction sensor provided independently of the GPS sensor 15.

The data recording unit 16 includes a map database constituted by map data files, and the map data is recorded in the map database. The map data includes such data as intersection data relating to intersections (branch points), node data relating to nodes, road data relating to road links, search data processed for a search operation, and facility data relating to facilities. The map data further includes feature data relating to features on roads.

The data recording unit 16 further includes such databases as a statistical database constituted by statistical data files and a driving history database constituted by driving history data files. Statistical data and driving history data are recorded in the statistical data files and the driving history data files, respectively, as result data.

To record the variety of data described above, the data recording unit 16 includes a not-illustrated disk, such as a hard disk, a CD (Compact Disk), a DVD (Digital Versatile Disk), and an optical disk. The data recording unit 16 further includes a not-illustrated head for reading and writing a variety of data such as a read-and-write head. The data recording unit 16 can also include a memory card or the like. The disks, the memory card, and so forth constitute an external storage device.

Such databases as the map database, the statistical database, and the driving history database, which are formed in the data recording unit 16 in the present embodiment, can also be provided in the information center 51.

The navigation processing unit 17 includes a CPU (Central Processing Unit) 31, a RAM (Random Access Memory) 32, a ROM (Read-Only Memory) 33, a not-illustrated flash memory, and so forth. The CPU 31 serves as a control unit for controlling the entirety of the navigation device 14 and also as an arithmetic unit. The RAM 32 is used as a working memory when the CPU 31 performs the variety of arithmetic processes. The ROM 33 is recorded with a control program and a variety of other programs for performing such operations as the search of the route to the destination and a route guidance. The flash memory is used to record a variety of data, programs, and so forth. The RAM 32, the ROM 33, the flash memory, and so forth constitute an internal storage device.

As the operation unit 34, a keyboard, a mouse, and so forth, which are not illustrated, can be used. Further, as the display unit 35, a touch panel is used. A variety of screens formed on the display unit 35 can display thereon the vehicle position, the vehicle direction, a map, a searched route, guidance information along the searched route, traffic information, the distance to the next intersection on the searched route, the direction of travel at the next intersection, and so forth. Further, the display unit 35 also functions as an operation unit. Thus, a predetermined input operation can be performed by a touch on an image operation unit displayed on one of the screens in the form of an image, which includes a variety of keys, switches, buttons, and so forth.

Further, the audio input unit 36 is constituted by a not-illustrated microphone and so forth so that necessary information can be input in the unit by sound. Further, the audio output unit 37 includes a sound synthesis device and a speaker, which are not illustrated, to perform the route guidance along the searched route by the audio output.

The communication unit 38 includes such receivers as a not-illustrated beacon receiver and a not-illustrated FM (Frequency Modulation) receiver. The beacon receiver receives a variety of information such as current traffic information transmitted from a road traffic information center and general information. The FM receiver receives information as FM multiplex broadcasting via an FM broadcast station. In addition to such information as the traffic information and the general information, the communication unit 38 can receive such data as the map data, the statistical data, and the driving history data from the information center 51 via the network 63.

Therefore, the information center 51 includes a server 53, a communication unit 57 connected to the server 53, a database (DB) 58 serving as an information recording unit, and so forth. The server 53 includes a CPU 54 serving as a control unit and as an arithmetic unit, a RAM 55, a ROM 56, and so forth. Further, data similar to the variety of data recorded in the data recording unit 16 is recorded in the database 58.

Each of such components as the navigation system, the navigation processing unit 17, the CPU 31, the CPU 54, and the server 53 functions as a computer when operating independently or in combination with at least another one of the components, and performs arithmetic processing on the basis of a variety of programs, data, and so forth. Further, the data recording unit 16, the RAM 32, the RAM 55, the ROM 33, the ROM 56, the database 58, the flash memory, and so forth constitute a recording medium. Further, as the arithmetic unit, each of the CPU 31 and the CPU 54 can be replaced by an MPU (Micro Processing Unit) or the like.

Description will now be made of a basic operation of the navigation system having the above-described configuration.

Firstly, upon activation of the navigation device 14 through the operation of the operation unit 34 by the driver, not-illustrated current location reading processing means of the CPU 31 performs a current location reading process to read the vehicle position and the vehicle direction detected by the GPS sensor 15. Then, not-illustrated matching processing means of the CPU 31 performs a matching process to identify the vehicle position by determining on which road link the vehicle is located on the basis of such factors as the track of the read vehicle position and the shape and the arrangement of each of road links constituting roads surrounding the vehicle position.

Subsequently, not-illustrated basic information acquisition processing means of the CPU 31 performs a basic information acquisition process to acquire the map data by reading the data from the data recoding unit 16 or by receiving the data from the information center 51 or the like via the communication unit 38. In the acquisition of the map data from the information center 51 or the like, the basic information acquisition processing means downloads the received map data to the flash memory.

Then, not-illustrated display processing means of the CPU 31 performs a display process to form the variety of screens on the display unit 35. For example, map display processing means of the display processing means performs a map display process to form the map screen on the display unit 35 and display on the map screen the vehicle position, the vehicle direction, and a map showing a surrounding area.

Accordingly, the driver can drive the vehicle in accordance with the map, the vehicle position, and the vehicle direction.

Further, upon input of the destination through the operation of the operation unit 34 by the driver, not-illustrated destination setting processing means of the CPU 31 performs a destination setting process to set the destination. The place of departure can also be input and set according to need. It is also possible to previously register a predetermined location and set the registered location as the destination. Subsequently, upon input of a search condition through the operation of the operation unit 34 by the driver, not-illustrated search condition setting processing means of the CPU 31 performs a search condition setting process to set the search condition.

When the destination and the search condition have been thus set, not-illustrated route search processing means of the CPU 31 performs a route search process to read the vehicle position, the vehicle direction, the destination, the search condition, and so forth, and read the search data and so forth from the data recording unit 16. Then, on the basis of the vehicle position, the vehicle direction, the destination, the search data, and so forth, the route search processing means searches for a route from the place of departure indicated by the vehicle position to the destination under the search condition, and outputs route data representing the searched route. In this process, a route having the smallest sum of link costs assigned to the respective road links of the route is determined as the searched route.

The route search process can also be performed in the information center 51. In this case, the CPU 31 transmits the vehicle position, the vehicle direction, the destination, the search condition, and so forth to the information center 51 via the network 63. When the information center 51 receives the vehicle position, the vehicle direction, the destination, the search condition, and so forth, not-illustrated route search processing means of the CPU 54 performs a route search process similar to the route search process performed by the CPU 31, to thereby read the search data and so forth from the database 58, search for a route from the place of departure to the destination under the search condition on the basis of the vehicle position, the vehicle direction, the destination, the search data, and so forth, and output route data representing the searched route. Then, not-illustrated transmission processing means of the CPU 54 performs a transmission process to transmit the route data to the navigation device 14 via the network 63.

Subsequently, not-illustrated guidance processing means of the CPU 31 performs a guidance process to perform the route guidance. To perform the route guidance, route display processing means of the guidance processing means performs a route display process to read the route data and display the searched route on the map screen in accordance with the route data.

In the present embodiment, the touch panel is used as the display unit 35. Therefore, if at least one area is touched, i.e., traced in the present embodiment, along a predetermined road on the map screen, the road can be specified and set as the driving route to the destination, without the execution of the search operation of the route.

In this case, through the operation by the driver of a mode selection switch provided to the operation unit 34, switching is performed between a search mode in which the destination is input to search for the route and a touch mode in which the tracing with a finger is performed along a road to set the driving route.

Description will now be made of a method of setting the driving route in the touch mode.

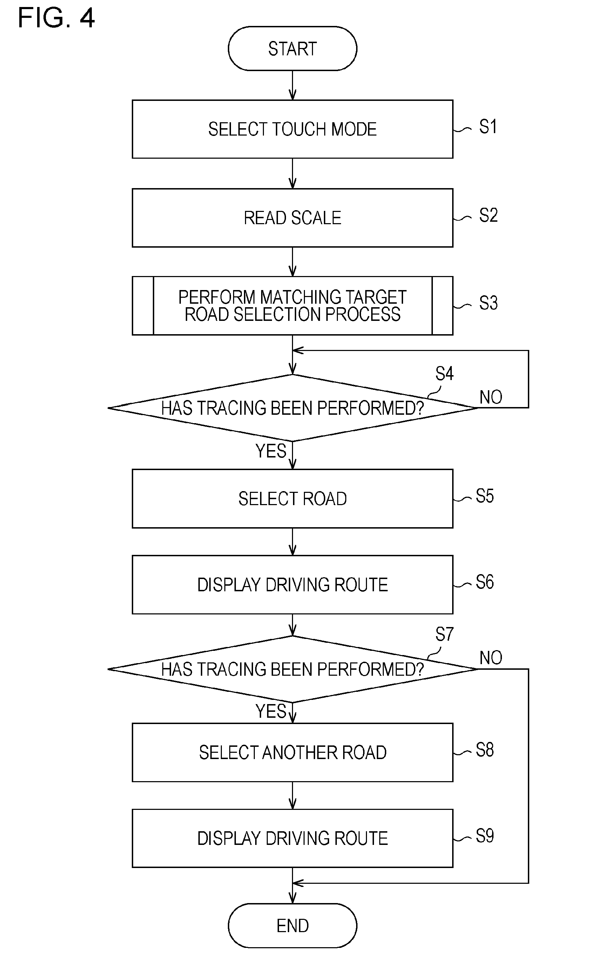

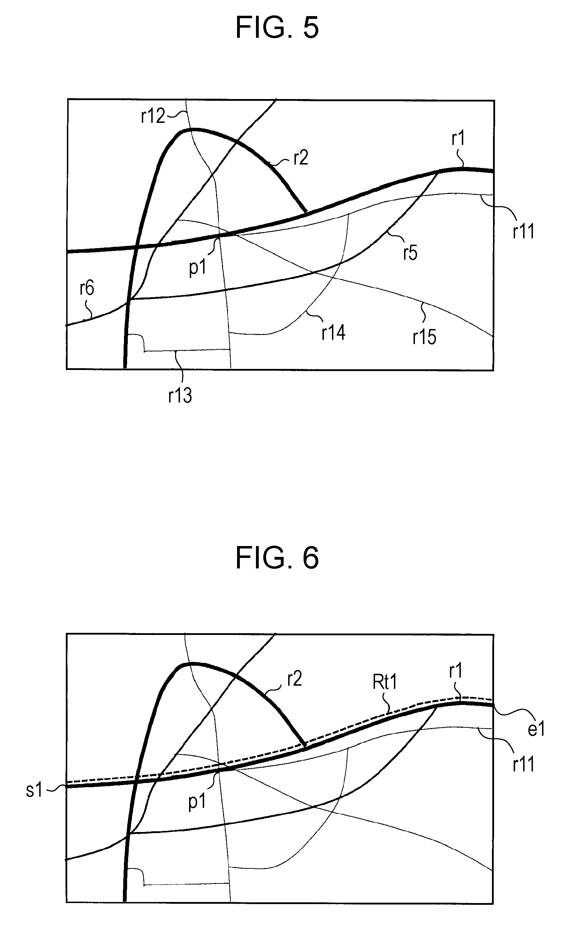

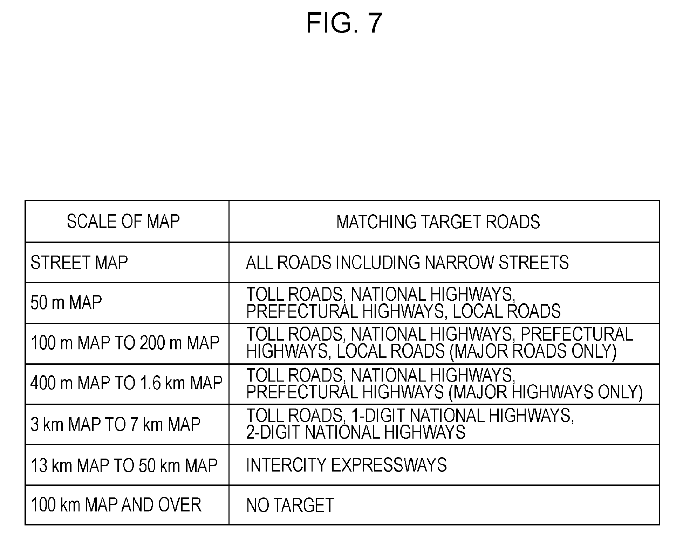

Fig. 4 is a flowchart illustrating a driving route setting method of the embodiment of the present invention. Fig. 5 is a diagram illustrating the types of roads of the embodiment of the present invention. Fig. 6 is a diagram for explaining the driving route setting method of the embodiment of the present invention. Fig. 7 is a diagram illustrating an example of a matching target road map of the embodiment of the present invention.

In Fig. 5, r1, r2, r5, r6, and r11 to r15 indicate roads, and p1 indicates a branch point at which the road 11 branches from the road r1.

In road data, the respective roads are classified into types in accordance with the attributes of the roads and recorded in the data recording unit 16 (Fig. 1). That is, the respective roads are classified into the first to tenth types. The first type includes the intercity expressways of the expressways. The second type includes the toll roads such as the urban expressways of the expressways. The third type includes the one-digit national highways of the national highways. The fourth type includes the two-digit national highways of the national highways. The fifth type includes the remaining highways of the national highways. The sixth type includes the major highways of the prefectural highways. The seventh type includes the remaining highways of the prefectural highways. The eighth type includes the major roads of the local roads. The ninth type includes the remaining roads of the local roads. The tenth type includes the narrow streets. The respective roads, which are classified into the first to tenth types in accordance with the attributes of the roads in this case, can also be classified into the first to tenth types in the order of the traffic amount from the largest or in the order of the road distance from the start point to the end point from the longest.

Among the respective roads r1, r2, r5, r6, and r11 to r15 in the present embodiment, the roads r1 and r2 are included in the one-digit national highways of the national highways, and belong to the third type. Further, the roads r5 and r6 are included in the major highways of the prefectural highways, and belong to the sixth type. Further, the roads r11 to r15 are included in the remaining roads of the local roads, and belong to the ninth type.

Firstly, not-illustrated mode determination processing means of the CPU 31 performs a mode determination process to determine whether or not the touch mode has been selected as the specified mode. If the touch mode has been selected, not-illustrated driving route setting processing means of the CPU 31 performs a driving route setting process to set a road traced with a finger on the map screen as the driving route to the destination.

There is a case in which a plurality of roads are located adjacent to one another when the tracing with a finger is performed along a predetermined road on the map screen to set the road as the driving route to the destination. In such a case, for example, if all of the adjacent roads are set as target roads used for setting the driving route, i.e., matching target roads, a road different from the road intended by the driver may be set as the driving route.

In the present embodiment, therefore, the matching target roads are changed in accordance with the scale of the map displayed on the map screen.

Therefore, scale determination processing means of the driving route setting processing means performs a scale determination process to read the scale of the map displayed on the map screen at the time of the process. The map screen is formed thereon with a plurality of scale change switches prepared for respective scales. The switches constitute a scale change unit for changing the scale of the displayed map. When the driver touches (specifies) a predetermined one of the scale change switches, the scale of the map is changed. Accordingly, on the basis of a sensor output of the scale change switch, the scale determination processing means can read the scale of the map displayed on the map screen.

The scale of the map is expressed in the size of the area shown by the map on the map screen. The map is classified into, for example, a street map, a 50 m map, a 100 m map, a 200 m map, a 400 m map, an 800 m map, a 1.6 km map, a 3 km map, a 7 km map, a 13 km map, a 26 km map, a 50 km map, a 100 km map, and so forth in the order of the area size from the smallest.

Subsequently, matching target road selection processing means of the driving route setting processing means performs a matching target road selection process to select the matching target roads corresponding to the scale of the map by referring to the matching target road map of Fig. 7 recorded in the data recording unit 16.

In the present embodiment, if the 100 km map is displayed on the map screen, there is no road included in the matching target roads, and if the 13 km map, the 26 km map, or the 50 km map is displayed, the intercity expressways are included in the matching target roads. Further, if the 3 km map or the 7 km map is displayed, the toll roads, the one-digit national highways, and the two-digit national highways are included in the matching target roads, and if the 400 m map, the 800 m map, or the 1.6 km map is displayed, the toll roads, the remaining highways of the national highways, and the major highways of the prefectural highways are included in the matching target roads. Further, if the 100 m map or the 200 m map is displayed, the toll roads, the remaining highways of the national highways, the remaining highways of the prefectural highways, and the major roads of the local roads are included in the matching target roads, and if the 50 m map is displayed, the toll roads, the remaining highways of the national highways, the remaining highways of the prefectural highways, and the remaining roads of the local roads are included in the matching target roads. Further, if the street map is displayed, all roads including the narrow streets are included in the matching target roads.

The roads not included in the matching target roads are excluded from the targets used for setting the driving route.

Then, specification determination processing means of the driving route setting processing means performs a specification determination process to determine whether or not a road on the map screen has been specified through the touch on the road by the driver, i.e., whether or not the tracing with a finger has been performed along a road on the map screen in the present embodiment.

If the driver performs the tracing with a finger along a road on the map screen, road selection processing means of the driving route setting processing means performs a road selection process to select, from the matching target roads corresponding to the read scale, i.e., the matching target roads corresponding to the map displayed on the map screen, the road nearest to a point touched by the driver, i.e., the road nearest to the tracing track in the present embodiment, as the road used for setting the driving route.

In the present embodiment, the driver performs the tracing along a road on the map screen. Alternatively, when a point on a road is specified by the touch thereon, the road nearest to the specified point can be selected as the road used for setting the driving route. Further, when a plurality of points on a road are specified by the touch thereon, the road nearest to the track drawn by the plurality of specified points can be selected as the road used for setting the driving route.

For example, if the map shown in Fig. 6 is the 3 km map, the toll roads, the one-digit national highways, and the two-digit national highways are included in the matching target roads. Thus, if the driver performs the tracing along a road from the tracing start point s1 to the tracing end point e1, the road selection processing means selects from the one-digit national highways r1 and r2 the road r1 for setting the driving route. In this case, the road r11 is included in the remaining roads of the local roads, and thus is not included in the matching target roads in the 3 km map. Therefore, the road r11 does not constitute the road for setting the driving route.

When the road r1 used for setting the driving route has been thus selected, driving route display processing means of the driving route setting processing means performs a driving route display process to display the driving route Rt1 on the map along the road r1.

Subsequently, when the driver touches a confirmation key which constitutes a confirmation component on the map screen, route confirmation processing means of the driving route setting processing means performs a route confirmation process to confirm the driving route Rt1 displayed on the map screen. The driving route can be set in the above-described manner.

In the selection of the road used for setting the driving route from the matching target roads corresponding to the map displayed on the map screen, if the selected road is not the road intended by the driver, and if the driver again performs the tracing along the road from the tracing start point s1 to the tracing end point e1, the road selection processing means selects from the matching target roads another road adjacent to the already selected road as a candidate for the driving route Rt1, for example. Then, the driving route display processing means displays the driving route on the map along the another road.

The tracing does not need to be performed throughout from the tracing start point s1 to the tracing end point e1 along the road, and may be performed only along a segment of the road from the tracing start point s1 to the tracing end point e1.

As described above, in the present embodiment, the matching target roads are selected in accordance with the scale of the map displayed on the map screen, and the road used for setting the driving route is selected from the selected matching target roads. Therefore, when a plurality of roads are located adjacent to one another, for example, it is possible to prevent a road different from the road intended by the driver from being set as the driving route. Accordingly, a predetermined road on the map screen can be accurately set as the driving route.

The flowchart of Fig. 4 will now be described. At Step S1, the touch mode is selected. As Step S2, the scale is read. At Step S3, the matching target road selection process is performed. At Step S4, the tracing is waited for. If the tracing has been performed, the procedure moves to Step S5. At Step S5, a road is selected. At Step S6, the driving route is displayed. At Step S7, whether or not the tracing has been performed is determined. If the tracing has been performed, the procedure moves to Step S8. If the tracing has not been performed, the procedure is completed. At Step S8, another road is selected. At Step S9, the driving route is displayed, and the processing is completed.

In the above-described embodiment, the driving route is set by the tracing with a finger along a road on the map screen. If the driver wants to change at least a part of the route searched for in the route search process, and if the driver traces a predetermined section, a predetermined road can be selected and set as the driving route.

Further, in the above-described embodiment, the touch panel is used as the display unit 35, and the touching movement is performed along a predetermined road on the map screen. Alternatively, a liquid crystal screen or the like can be used as the display unit 35, and the driving route can be set by the movement of a cursor along a predetermined road on the map screen.

Further, in the above-described embodiment, the driving route is set in the navigation device 14. Alternatively, the driving route can be set through the operation of a personal computer.

The present invention is not limited to the above-described embodiment but can be modified in a variety of ways on the basis the spirit of the invention, and such modifications are not excluded from the scope of the invention.
The present invention enables accurate setting of a predetermined road as a driving route. The present invention includes scale determination processing means for reading the scale of a map displayed on a map screen, matching target road selection processing means for selecting, in accordance with the scale of the map, matching target roads which are target roads used for setting a driving route, specification determination processing means for determining whether or not a road has been specified by an operator, and road selection processing means for selecting, if the road has been specified by the operator, one of the matching target roads nearest to a specified point as a road used for setting the driving route. If the road has been specified, one of the matching target roads nearest to the specified point is selected. Therefore, the driving route can be accurately set.

## Claims

1. A route setting system comprising:
scale determination processing means for reading the scale of a map displayed on a map screen;
matching target road selection processing means for selecting, in accordance with the scale of the map, matching target roads which are target roads used for setting a driving route;
specification determination processing means for determining whether or not a road has been specified by an operator; and
road selection processing means for selecting, if the road has been specified by the operator, one of the matching target roads nearest to a specified point as a road used for setting the driving route.

2. The route setting system according to Claim 1,
wherein the matching target roads are classified into types and set in accordance with the scale of the map.

3. The route setting system according to Claim 1,
wherein the specification determination processing means determines whether or not tracing has been performed along the road.

4. The route setting system according to Claim 1,
wherein the specification determination processing means determines whether or not a point on the road has been specified.

5. A route setting method comprising:
reading the scale of a map displayed on a map screen;
selecting, in accordance with the scale of the map, matching target roads which are target roads used for setting a driving route;
determining whether or not a road has been specified by an operator; and
selecting, if the road has been specified by the operator, one of the matching target roads nearest to a specified point as a road used for setting the driving route.

6. A program for executing a route setting method, the program causing a computer to function as scale determination processing means for reading the scale of a map displayed on a map screen, matching target road selection processing means for selecting, in accordance with the scale of the map, matching target roads which are target roads used for setting a driving route, specification determination processing means for determining whether or not a road has been specified by an operator, and road selection processing means for selecting, if the road has been specified by the operator, one of the matching target roads nearest to a specified point as a road used for setting the driving route.
